(19) Europäisches Patentamt
European Patent Office
Office européen des brevets

(11) EP 1 443 703 B1

(12) EUROPEAN PATENT SPECIFICATION

(45) Date of publication and mention of the grant of the patent:
**22.11.2006 Bulletin 2006/47**

(51) Int Cl.:
***H04L 12/26*** *(2006.01)*

(21) Application number: **03250613.1**

(22) Date of filing: **31.01.2003**

(54) **Method and apparatus for generating test packets in a data network**

Verfahren und Vorrichtung zum Generieren von Testpaketen in einem Datennetzwerk

Procedé et dispositif de génération de paquets d'essai dans un reseau de données

(84) Designated Contracting States:
**DE FR GB**

(43) Date of publication of application:
**04.08.2004 Bulletin 2004/32**

(73) Proprietor: **Agilent Technologies, Inc. - a Delaware corporation -**
**Palo Alto, CA 94303-0870 (US)**

(72) Inventor: **Old, Gordon**
**Agilent Technologies UK Limited**
**Middle Lothian EH30 9TG (GB)**

(74) Representative: **Coker, David Graeme et al**
**Agilent Technologies UK Ltd,**
**Legal Dept,**
**Eskdale Road,**
**Winnersh Triangle**
**Wokingham, Berks RG41 5DZ (GB)**

(56) References cited:
**US-A- 6 075 773** **US-B1- 6 414 942**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 443 703 B1

## Description

Field of the Invention

This invention relates to a method for managing data packet traffic, particularly, though not exclusively, to a method for managing packet traffic in a test transmitter, where the packets are of different lengths.

Background of the Invention

Many modern high speed communication systems make use of data packets, which are switched through the communications network according to their required destinations. An Integrated Services Digital Network (ISDN) provides a single network that can handle voice, data and video. Whereas ISDN has traditionally been applied to narrowband telephony, a broadband ISDN consists of broadband switches and terminals which can tie high-speed local area networks (LANs), digital TV and other video services, data communication devices, telemetry equipment and voice into one digital network. One example of such a broadband ISDN is the Synchronous Optical NETwork (SONET) standard, which has been incorporated into the Synchronous Digital Hierarchy (SDH) multiplexing standard defined by the International Telecommunications Union (ITU).

As will be appreciated, in order to test systems and equipment operating to these standards, it is necessary to generate data packets having different lengths and bandwidths. For example, in order to test packet routing equipment, it is necessary to be able to generate several or many data streams, each having packets of different lengths at particular bandwidths. In the past, this has been achieved by generating packets at a fixed rate with the lengths of the packets varying in order to try to generate a required bandwidth. However, this has led to queues of packets with bunching of small packets after longer packets with consequent variations in the lengths of the gaps between packets.

US 6 075 773 describes a multi-user LAN packet generator for enabling parallel testing of many ports of a device under test, and containing a microprocessor for generating Ethernet packets. A packet memory stores the generated packets, and a plurality of media access controllers (MACs) are connected for controlling output of Ethernet packets from the packet memory. This document mentions the possibility of manipulating inter packet gaps, but no details are provided of how this may be accomplished.

Brief Summary of the Invention

The present invention therefore seeks to provide a method and apparatus for managing packet traffic in a test transmitter, where the packets are of different lengths, which overcomes, or at least reduces the abovementioned problems of the prior art, so as to maintain a constant inter-packet gap, as far as possible, by using the method of claim 1 and the apparatus of claim 5.

Accordingly, in a first aspect, the invention provides a method of managing packet traffic in a test transmitter, the method comprising the steps method of determining a constant inter-packet gap length between packets to be multiplexed onto a data channel from a plurality of packet streams, by:

- determining the packet streams required to be multiplexed onto the data channel, the packets of each packet stream having a predetermined constant packet length;
- determining a bandwidth required for the data channel;
- calculating the sum of the lengths of one packet from each of the packet streams;
- calculating the total length of inter-packet gaps required to provide the predetermined bandwidth from the sum of the lengths of packets; and
- calculating the inter-packet gap length required between each packet from the total length of inter-packet gaps;

and multiplexing the packets from each of the plurality of packet streams onto the data channel interspersed by inter-packet gaps that match the determined inter-packet gap length, individually for integer gap lengths or averaged over repeating groups of gaps for fractional gap lengths.

The step of multiplexing the packets may comprise the steps of:

a) directing a packet from one of the packet streams to the data channel;
b) enabling a counter to start counting when an end of the packet passes onto the data channel;
c) determining when the counter reaches a count corresponding to the end of the required inter-packet gap length;
d) directing a next packet from one of the packet streams to the data channel when the counter has reached the count corresponding to the end of the required inter-packet gap length; and
e) repeating steps b) to d) for each of the packets to be multiplexed onto the data channel.

The step of enabling a counter may comprise the step of enabling a Direct Digital Synthesizer (DDS) circuit and the method may further comprise the step of disabling the DDS when a beginning of a packet passes onto the data channel.

According to a second aspect, the invention provides an apparatus for managing packet traffic in a test transmitter, the apparatus comprising means for receiving information regarding a predetermined length of packets from each of a predetermined plurality of packet streams and a predetermined required bandwidth, a memory for storing the received information regarding predetermined packet length for each possible packet stream, a processing means for determining a constant inter-packet gap length between packets to be multiplexed onto a data channel from the plurality of packet streams, based on the predetermined length of packets from each of a predetermined plurality of packet streams and a predetermined required bandwidth, by: reading the predetermined packet length for each of the predetermined plurality of packet streams from the memory; calculating the sum of the lengths of one packet from each of the packet streams; calculating the total length of inter-packet gaps required to provide the predetermined bandwidth from the sum of the lengths of packets; and calculating the inter-packet gap length required between each packet from the total length of inter-packet gaps; and a multiplexer for multiplexing the packets from each of the plurality of packet streams onto the data channel interspersed by inter-packet gaps that match the determined inter-packet gap length, individually for integer gap lengths or averaged over repeating groups of gaps for fractional gap lengths.

The multiplexer may comprise a plurality of inputs, each for receiving one of said packet streams and an output for providing said data channel, the multiplexer having means for switching a packet from one of the packet streams to the data channel, and the apparatus may further comprise a counter means coupled to the multiplexer, the counter means being enabled to start counting when an end of a packet passes onto the data channel and for directing a next packet from one of the packet streams to the data channel when the counter means has reached a count corresponding to the end of the required inter-packet gap length.

The counter may comprise a Direct Digital Synthesizer (DDS) circuit and the apparatus may further comprise means for disabling the DDS when a beginning of a packet passes onto the data channel.

In one embodiment of the method or apparatus, the inter-packet gap length required between each packet may be a rational fraction and the DDS circuit adjusts the gap lengths between packets within a frame so that the average inter-packet gap length at least approximates to the required inter-packet gap length.

Brief Description of the Drawings

One embodiment of the invention will now be more fully described, by way of example, with reference to the drawings, of which:

FIG. 1 shows a block diagram of a system according to one embodiment of the present invention;
FIG. 2 shows a schematic diagram of packet lengths and inter-packet gaps.

Detailed Description of the Drawings

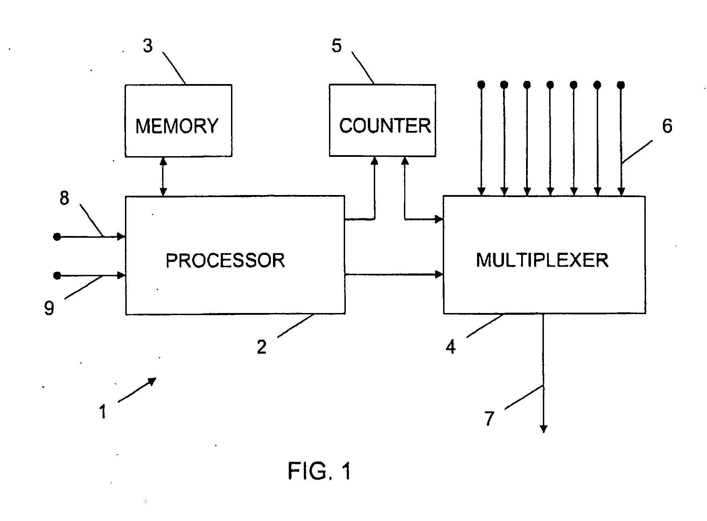

Thus, as shown in FIG. 1, an apparatus 1 for managing packet traffic in a test transmitter includes a processor 2 coupled to be able to read a memory 3, a multiplexer 4 and a counter 5. The multiplexer 4 has a plurality of inputs 6 for receiving packet data streams, and an output 7 onto which the packets are multiplexed.

The processor 2 has a first input 8 for receiving information on which particular packet data streams are to be multiplexed by the apparatus. There may be a large number of such packet data streams possible, but only particular ones are chosen to be input to the multiplexer. Each of the possible packet data streams has a particular predetermined packet length. This packet length is stored in the memory 3 for each of the possible packet data streams, so that, when the information regarding which packet data streams have been chosen is received by the processor 2 at the first input 8, the processor 2 can obtain information regarding the lengths of packets on those chosen packet data streams from the memory 3.

The processor 2 also has a second input 9 for receiving information regarding the desired bandwidth for the data channel output 7 from the multiplexer 4. It will be appreciated that, although the first and second inputs 8 and 9 are shown as separate in the drawing, the information regarding the chosen packet data streams and the bandwidth can, of course, be provided to the processor 2 in any desired manner.

The processor 2 uses the chosen packet data stream information, the packet length information read from the memory 3 and the bandwidth information to calculate an inter-packet gap length that would be distributed equally between all the packets to be multiplexed over a complete output frame of one packet from each data stream. In a transmitter with N streams of data to be transmitted, where the length of packets from each stream is a constant (giving lengths Len(1) to Len(N)), the total number of bytes in a single cycle of a round-robin which picks a packet from each stream will be ΣLen. For a given desired bandwidth, this number of bytes will take a certain length of time. However, the transmission time of a single byte is fixed by the transmission medium, so the bytes are not stretched to fit the bandwidth required, instead, gaps are added between packets. Therefore, the number of gap bytes required in a cycle of the round robin can be calculated and then divided by N to give the required inter-packet gap.

For example with 8 streams of data where the packet lengths are 64, 65, 66, 67, 68, 69, 70 and 71 respectively the total number of bytes is 540. If the bandwidth required is 60% of the line rate, so that the packets take up 60% of the output frame, the number of gap bytes required is

$$(540 \div 60\%) - 540 = 360.$$

For 8 streams, this means 360 ÷ 8 = 45 gap bytes after each packet.

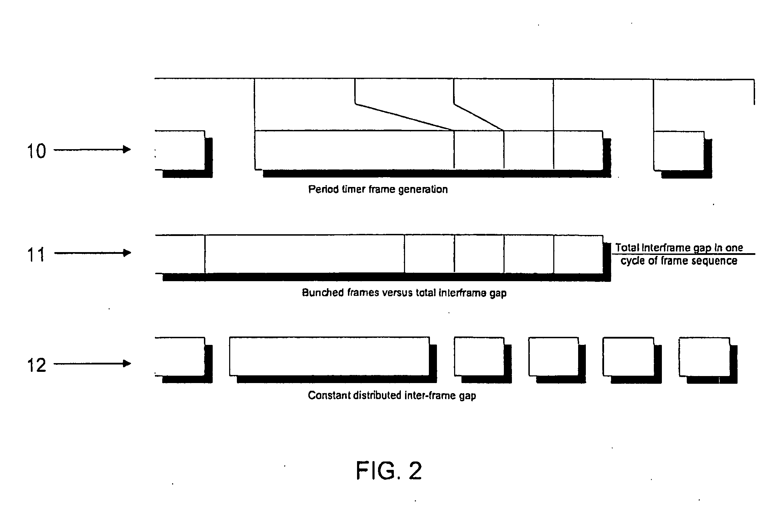

This can be seen more clearly in FIG. 2, where a sequence of packets of lengths 2, 8, 2, 2 and 2 for a single output frame is shown. Top row 10 shows a time-profile of how the packets would appear using a period timer. In this case, the packets are requested (by the multiplexer) at regular intervals. However, because one of the packets has a length of 8, being larger than the regular interval, the next three packets are bunched together with the long packet with no gaps between them. The diagonal lines show that packets are queued (delayed) from the instant when they are requested. The second row 11 shows schematically how the required inter-packet gap is calculated by the processor of FIG. 1 according to one embodiment of the present invention. The total number of bytes in a single frame of the output data channel (the fundamental unit of traffic which will be repeated) is determined by the processor from the lengths of packets of each input data stream. In this case, the total number of bytes of the packets in the frame is 2+8+2+2+2+2=18. For a required bandwidth of 75%, the total non-data time in a frame of the sequence must be 25%. If 18 = 75%, 25% = 6 so that the total inter-packet gap in one frame of the sequence is therefore 6 byte times (line clock periods). The final row 12 in FIG. 2 shows this inter-packet gap distributed equally between the packets in the sequence. Since the number of packets is 6, the inter-frame gap required is 1.

Returning now to FIG. 1, a counter 5, which in this embodiment is a Direct Digital Synthesizer (DDS) is programmed by the processor 2 with a value which will cause the DDS to tick after the required number of gap bytes. This output will become the request for a new packet. The DDS is enabled by the multiplexer 4 when an end-of-packet event occurs and disabled when it generates the start-of-packet request.

Thus, when a start-of-packet request is generated by the DDS, the multiplexer 4 switches a packet from one of the input data streams 6 to the output channel 7. When the end of that packet passes onto the output channel 7, the multiplexer enables the DDS, which is reset to the programmed inter-packet gap. The DDS counts the inter-packet gap length and, when the programmed count is reached, generates a new packet request to the multiplexer, which switches the next packet from another input data stream 6 to the output channel 7.

Any latency between the end-of-packet and the enabling of the DDS, or between the start-of-packet request and the start-of-packet event can be accommodated if they are fixed delays. They would simply be subtracted from the gap for which the DDS was programmed. Since, in an ethernet application, there is a minimum inter-packet gap of 12 bytes, there is considerable room for such delays before they compromise the ability of this technique to allow the generation of all required bandwidths. Thus, the gap length programmed to the DDS can be adjusted, if necessary to take into account any delays in the system.

Furthermore, although the examples described above yield whole numbers for the inter-packet gaps, a DDS may be programmed for a rational fraction, and hence yield inter-packet gaps which are individually whole numbers, but for which the average inter-packet gap is not a whole number. The larger the degree of accuracy required, the larger the design of DDS. For example, if the calculation of required inter-packet gap length comes to 6.75, the gaps would need to be 6, 7, 7, 7, repeating. This is where the power of the DDS comes into play, because for a DDS based on an accumulator of, for example 8 bits, the frequency resolution is one part in 256. For greater resolution, a longer accumulator is used in the DDS. The frequency resolution becomes 1 in $2^n$ of the circuit's clock frequency where n is the number of bits in the accumulator of the DDS. A DDS works by adding a given constant to an accumulator each clock cycle. When the accumulator rolls over, the carry bit is the output. The carry bit is not stored, so the accumulator will then hold the residue of the addition above $2^n$. For example, with a 3 bit DDS and a clock frequency of 8MHz, to synthesize a frequency of 5MHz, the constant 5 would be added each time. The accumulator state on consecutive cycles would be 0, 5, 2(10-8, carry out), 7, 4(12-8, carry out), 1 (9-8, carry out), etc. Thus, when the inter-packet gap length required between each packet is a rational fraction, the DDS circuit adjusts the gap lengths between packets within a frame so that the average inter-packet gap length at least approximates to the required inter-packet gap length, depending on the available resolution of the DDS.

## Claims

1. A method of managing packet traffic in a test transmitter, the method comprising the steps of:

    determining a constant inter-packet gap length between packets to be multiplexed onto a data channel from a plurality of packet streams, further **characterised by** the steps of

    - determining the packet streams required to be multiplexed onto the data channel, the packets of each packet stream having a predetermined constant packet length;
    - determining a bandwidth required for the data channel;
    - calculating the sum of the lengths of one packet from each of the packet streams;
    - calculating the total length of inter-packet gaps required to provide the predetermined bandwidth from the sum of the lengths of packets; and
    - calculating the inter-packet gap length required between each packet

from the total length of inter-packet gaps; and multiplexing the packets from each of the plurality of packet streams onto the data channel interspersed by inter-packet gaps that match the determined inter-packet gap length, individually for integer gap lengths or averaged over repeating groups of gaps for fractional gap lengths.

**2.** A method of managing packet traffic according to claim 1, wherein the step of multiplexing the packets comprises the steps of:

a) directing a packet from one of the packet streams to the data channel;
b) enabling a counter to start counting when an end of the packet passes onto the data channel;
c) determining when the counter reaches a count corresponding to the end of the required inter-packet gap length;
d) directing a next packet from one of the packet streams to the data channel when the counter has reached the count corresponding to the end of the required inter-packet gap length; and
e) repeating steps b) to d) for each of the packets to be multiplexed onto the data channel.

**3.** A method of managing packet traffic according to claim 2, wherein the step of enabling a counter comprises the step of enabling a Direct Digital Synthesizer (DDS) circuit and the method further comprises the step of disabling the DDS when a beginning of a packet passes onto the data channel.

**4.** A method of managing packet traffic according to claim 3, wherein the inter-packet gap length required between each packet is a rational fraction and the DDS circuit adjusts the gap lengths between packets within a frame so that the average inter-packet gap length at least approximates to the required inter-packet gap length.

**5.** An apparatus (1) adapted to manage packet traffic in a test transmitter, the apparatus comprising:

means (8,9) for receiving information regarding a predetermined length of packets from each of a predetermined plurality of packet streams and a predetermined required bandwidth;
a memory (3) adapted to store the received information regarding predetermined packet length for each possible packet stream ;
**characterised by**
a processing means (2) adapted to determine a constant inter-packet gap length between packets to be multiplexed onto a data channel from the plurality of packet streams, based on the predetermined length of packets from each of the predetermined plurality of packet streams and the predetermined required bandwidth, by:

- reading the predetermined packet length for each of the predetermined plurality of packet streams from the memory;
- calculating the sum of the lengths of one packet from each of the packet streams;
- calculating the total length of inter-packet gaps required to provide the predetermined bandwidth from the sum of the lengths of packets and
- calculating the inter-packet gap length required between each packet from the total length of inter-packet gaps
and

a multiplexer (4) for multiplexing the packets from each of the plurality of packet streams (6) onto the data channel (7) interspersed by inter-packet gaps that match the determined inter-packet gaps length, individually for integer gap lengths or averaged over repeating groups of gaps for fractional gap lengths.

**6.** An apparatus for managing packet traffic according to claim 5, wherein the multiplexer (4) comprises a plurality of inputs, each for receiving one of said packet streams (6) and an output for providing said data channel (7), the multiplexer (4) having means for switching a packet from one of the packet streams to the data channel,
and wherein the apparatus further comprises a counter means (5) coupled to the multiplexer (4), the counter means (5) being enabled to start counting when an end of a packet passes onto the data channel (7) and for directing a next packet from one of the packet streams (6) to the data channel (7) when the counter means (5) has reached a count corresponding to the end of the required inter-packet gap length.

**7.** An apparatus for managing packet traffic according to claim 6, wherein the counter means (5) comprises a Direct Digital Synthesizer (DDS) circuit, the DDS being disabled from counting when a beginning of a packet passes onto the data channel.

**8.** An apparatus for managing packet traffic according to claim 7, wherein the inter-packet gap length required between each packet is a rational fraction and the DDS circuit adjusts the gap lengths between packets within a frame so that the average inter-packet gap length at least approximates to the required inter-packet gap length.

**9.** An apparatus according to either claim 7 or claim 8, wherein the DDS is reset with the determined inter-packet gap length whenever a beginning of a packet passes onto the data channel.

## Patentansprüche

1. Ein Verfahren zum Verwalten von Paketverkehr bei einem Testsender, wobei das Verfahren folgende Schritte aufweist:

   Bestimmen einer konstanten Zwischenpaketzwischenraumlänge zwischen Paketen, die von einer Mehrzahl von Paketströmen auf einen Datenkanal gemultiplext werden sollen, ferner **gekennzeichnet durch** die folgenden Schritte:

   - Bestimmen der Paketströme, die auf den Datenkanal gemultiplext werden sollen, wobei die Pakete jedes Paketstroms eine vorbestimmte konstante Paketlänge aufweisen;
   - Bestimmen einer Bandbreite, die für den Datenkanal erforderlich ist;
   - Berechnen der Summe der Längen eines Pakets von jedem der Paketströme;
   - Berechnen der Gesamtlänge von Zwischenpaketzwischenräumen, die erforderlich ist, um die vorbestimmte Bandbreite zu liefern, aus der Summe der Längen von Paketen; und
   - Berechnen der Zwischenpaketzwischenraumlänge, die zwischen jedem Paket erforderlich ist, aus der Gesamtlänge von Zwischenpaketzwischenräumen; und

   Multiplexen der Pakete von jedem der Mehrzahl von Paketströmen auf den Datenkanal durchsetzt **durch** Zwischenpaketzwischenräume, die mit der bestimmten Zwischenpaketzwischenraumlänge übereinstimmen, einzeln für ganzzahlige Zwischenraumlängen oder gemittelt über sich wiederholende Gruppen von Zwischenräumen für eine Bruchzwischenraumlänge.

2. Ein Verfahren zum Verwalten von Paketverkehr gemäß Anspruch 1, bei dem der Schritt des Multiplexens der Pakete folgende Schritte aufweist:

   a) Richten eines Pakets von einem der Paketströme zu dem Datenkanal;
   b) Ermöglichen, dass ein Zähler zu zählen beginnt, wenn ein Ende des Pakets auf den Datenkanal durchläuft;
   c) Bestimmen, wann der Zähler einen Zählwert erreicht, der dem Ende der erforderlichen Zwischenpaketzwischenraumlänge entspricht;
   d) Richten eines nächsten Pakets von einem der Paketströme zu dem Datenkanal, wenn der Zähler den Zählwert erreicht hat, der dem Ende der erforderlichen Zwischenpaketzwischenraumlänge entspricht; und
   e) Wiederholen der Schritte b) bis d) für jedes der Pakete, die auf den Datenkanal gemultiplext werden sollen.

3. Ein Verfahren zum Verwalten von Paketverkehr gemäß Anspruch 2, bei dem der Schritt des Freigebens eines Zählers den Schritt eines Freigebens einer Direktdigitalsynthesizerschaltung (DDS-Schaltung; DDS = Direct Digital Synthesizer) aufweist und das Verfahren ferner den Schritt eines Sperrens des DDS aufweist, wenn ein Anfang eines Pakets auf den Datenkanal durchläuft.

4. Ein Verfahren zum Verwalten von Paketverkehr gemäß Anspruch 3, bei dem die Zwischenpaketzwischenraumlänge, die zwischen jedem Paket erforderlich ist, ein rationaler Bruch ist und die DDS-Schaltung die Zwischenraumlängen zwischen Paketen innerhalb eines Rahmens einstellt, so dass die durchschnittliche Zwischenpaketzwischenraumlänge sich zumindest an die erforderliche Zwischenpaketzwischenraumlänge annähert.

5. Eine Vorrichtung (1), die angepasst ist, um Paketverkehr bei einem Testsender zu verwalten, wobei die Vorrichtung folgende Merkmale aufweist:

   eine Einrichtung (8, 9) zum Empfangen von Informationen hinsichtlich einer vorbestimmten Länge von Paketen von jedem einer vorbestimmten Mehrzahl von Paketströmen und einer vorbestimmten erforderlichen Bandbreite;
   einen Speicher (3), der angepasst ist, um die empfangenen Informationen hinsichtlich einer vorbestimmten Paketlänge für jeden möglichen Paketstrom zu speichern; **gekennzeichnet durch**
   eine Verarbeitungseinrichtung (2), die angepasst ist, um eine konstante Zwischenpaketzwischenraumlänge zwischen Paketen, die auf einen Datenkanal von der Mehrzahl von Paketströmen gemultiplext werden sollen, basierend auf der vorbestimmten Länge von Paketen von jedem der vorbestimmten Mehrzahl von Paketströmen und der vorbestimmten erforderlichen Bandbreite zu bestimmen, **durch**:

   - Lesen der vorbestimmten Paketlänge für jeden der vorbestimmten Mehrzahl von Paketströmen aus dem Speicher;
   - Berechnen der Summe der Längen eines Pakets von jedem der Paketströme;
   - Berechnen der Gesamtlänge von Zwischenpaketzwischenräumen, die erforderlich ist, um die vorbestimmte Bandbreite zu liefern, aus der Summe der Längen von Paketen; und

- Berechnen der Zwischenpaketzwischenraumlänge, die zwischen jedem Paket erforderlich ist, aus der Gesamtlänge von Zwischenpaketzwischenräumen; und

einen Multiplexer (4) zum Multiplexen der Pakete von jedem der Mehrzahl von Paketströmen (6) auf den Datenkanal (7) durchsetzt mit Zwischenpaketzwischenräumen, die mit der vorbestimmten Zwischenpaketzwischenraumlänge übereinstimmen, einzeln für ganzzahlige Zwischenraumlängen oder gemittelt über sich wiederholende Gruppen von Zwischenräumen für Bruchzwischenraumlängen.

**6.** Eine Vorrichtung zum Verwalten von Paketverkehr gemäß Anspruch 5, bei der der Multiplexer (4) eine Mehrzahl von Eingängen, jeweils zum Empfangen eines der Paketströme (6), und einen Ausgang zum Liefern des Datenkanals (7) aufweist, wobei der Multiplexer (4) eine Einrichtung zum Schalten eines Pakets von einem der Paketströme zu dem Datenkanal aufweist,
und wobei die Vorrichtung ferner eine Zählereinrichtung (5) aufweist, die mit dem Multiplexer (4) gekoppelt ist, wobei die Zählereinrichtung (5) freigegeben wird, um ein Zählen zu beginnen, wenn ein Ende eines Pakets auf den Datenkanal (7) durchläuft, und zum Richten eines nächsten Pakets von einem der Paketströme (6) zu dem Datenkanal (7), wenn die Zählereinrichtung (5) einen Zählwert erreicht hat, der dem Ende der erforderlichen Zwischenpaketzwischenraumlänge entspricht.

**7.** Eine Vorrichtung zum Verwalten von Paketverkehr gemäß Anspruch 6, bei der die Zählereinrichtung (5) eine Direktdigitalsynthesizerschaltung (DDS-Schaltung; DDS = Direct Digital Synthesizer) aufweist, wobei der DDS an einem Zählen gehindert wird, wenn ein Anfang eines Pakets auf den Datenkanal durchläuft.

**8.** Eine Vorrichtung zum Verwalten von Paketverkehr gemäß Anspruch 7, bei der die Zwischenpaketzwischenraumlänge, die zwischen jedem Paket erforderlich ist, ein rationaler Bruch ist und die DDS-Schaltung die Zwischenraumlängen zwischen Paketen innerhalb eines Rahmens einstellt, so dass die durchschnittliche Zwischenpaketzwischenraumlänge sich zumindest an die erforderliche Zwischenpaketzwischenraumlänge annähert.

**9.** Eine Vorrichtung gemäß Anspruch 7 oder Anspruch 8, bei der der DDS bei der bestimmten Zwischenpaketzwischenraumlänge immer dann rückgesetzt wird, wenn ein Anfang eines Pakets auf den Datenkanal durchläuft.

## Revendications

**1.** Procédé de gestion de trafic de paquets dans un transmetteur d'essai, le procédé comprenant les étapes consistant à :

- déterminer une longueur constante d'intervalle inter-paquets entre paquets à multiplexer sur un canal de données, à partir d'une pluralité de flux de paquets, **caractérisé en outre par** les étapes consistant à :
- déterminer les flux de paquets pour lesquels un multiplexage est requis sur le canal de données, les paquets de chaque flux de paquets ayant une longueur de paquet constante prédéterminée ;
- déterminer une largeur de bande requise pour le canal de données;
- calculer la somme des longueurs d'un paquet de chacun des flux de paquets ;
- calculer la longueur totale d'intervalles inter-paquets requise pour fournir la largeur de bande prédéterminée à partir de la somme des longueurs de paquets ; et
- calculer la longueur d'intervalles inter-paquets requise entre chaque paquet, à partir de la longueur totale d'intervalles inter-paquets ; et
- multiplexer les paquets provenant de chacun de la pluralité de flux de paquets sur le canal de données parsemés d'intervalles inter-paquets qui correspondent à la longueur d'intervalle inter-paquets déterminée, individuellement pour des longueurs d'intervalle entières ou de façon moyennée sur des groupes d'intervalles qui se répètent, pour des longueurs d'intervalle fractionnaires.

**2.** Procédé de gestion de trafic de paquets selon la revendication 1, dans lequel l'étape consistant à multiplexer les paquets comprend les étapes consistant à :

a) diriger un paquet depuis l'un des flux de paquets vers le canal de données ;
b) activer un compteur pour commencer à compter lorsqu'une fin du paquet passe sur le canal de données ;
c) déterminer le moment où le compteur atteint un nombre compté correspondant à la fin de la longueur d'intervalle inter-paquets requise ;
d) diriger un paquet suivant depuis l'un des flux de paquets vers le canal de données, lorsque le compteur a atteint le nombre compté correspondant à la fin de la longueur d'intervalle inter-paquets requise ; et

e) répéter les étapes b) à d) pour chacun des paquets à multiplexer sur le canal de données.

**3.** Procédé de gestion de trafic de paquets selon la revendication 2, dans lequel l'étape consistant à activer un compteur comprend l'étape consistant à activer un circuit de synthétiseur numérique direct (DDS) et le procédé comprend en outre l'étape consistant à désactiver le DDS lorsqu'un début d'un paquet passe sur le canal de données.

**4.** Procédé de gestion de trafic de paquets selon la revendication 3, dans lequel la longueur d'intervalle inter-paquets requise entre chaque paquet est une fraction rationnelle et le circuit DDS ajuste les longueurs d'intervalle entre paquets à l'intérieur d'une trame de manière que la longueur d'intervalle inter-paquets moyenne se rapproche au moins de la longueur d'intervalle inter-paquets requise.

**5.** Appareil (1) adapté pour gérer un trafic de paquets dans un transmetteur d'essai, l'appareil comprenant :

des moyens (8,9) destinés à recevoir des informations concernant une longueur prédéterminée de paquets provenant de chacun d'une pluralité prédéterminée de flux de paquets et une largeur de bande requise prédéterminée ;

une mémoire (3) adaptée pour stocker les informations reçues concernant la longueur de paquet prédéterminée pour chaque flux de paquets possible ; **caractérisé par**

un moyen de traitement (2), adapté pour déterminer une longueur d'intervalle inter-paquets constante entre paquets à multiplexer sur un canal de données, à partir de la pluralité de flux de paquets, sur la base de la longueur prédéterminée de paquets provenant de chacun de la pluralité prédéterminée de flux de paquets et de la largeur de bande requise prédéterminée, en :

- lisant depuis la mémoire la longueur de paquet prédéterminée pour chacun de la pluralité prédéterminée de flux de paquets;
- calculant la somme des longueurs d'un paquet provenant de chacun des flux de paquets ;
- calculant la longueur totale d'intervalles inter-paquets requise pour fournir la largeur de bande prédéterminée à partir de la somme des longueurs de paquets ; et
- calculant la longueur d'intervalles inter-paquets requise entre chaque paquet, à partir de la longueur totale d'intervalles inter-paquets; et

un multiplexeur (4) destiné à multiplexer les paquets provenant de chacun de la pluralité de flux de paquets (6) sur le canal de données (7) parsemés d'intervalles inter-paquets qui correspondent à la longueur d'intervalle inter-paquets déterminée, individuellement pour des longueurs d'intervalle entières ou de façon moyennée sur des groupes d'intervalles qui se répètent, pour des longueurs d'intervalle fractionnaires.

**6.** Appareil destiné à gérer un trafic de paquets selon la revendication 5, dans lequel le multiplexeur (4) comprend une pluralité d'entrées, chacune destinée à recevoir l'un desdits flux de paquets (6), et une sortie destinée à fournir ledit canal de données (7), le multiplexeur (4) ayant des moyens destinés à commuter un paquet depuis l'un des flux de paquets vers le canal de données, et dans lequel
l'appareil comprend en outre un moyen de compteur (5) couplé au multiplexeur (4), le moyen de compteur (5) étant activé pour commencer à compter lorsqu'une fin d'un paquet passe sur le canal de données (7) et destiné à diriger un paquet suivant depuis l'un des flux de paquets (6) vers le canal de données (7) lorsque le moyen de compteur (5) a atteint un nombre compté correspondant à la fin de la longueur d'intervalle inter-paquets requise.

**7.** Appareil destiné à gérer un trafic de paquets selon la revendication 6, dans lequel le moyen de compteur (5) comprend un circuit de synthétiseur numérique direct (DDS), le DDS étant désactivé de manière à ne pas compter lorsqu'un début d'un paquet passe sur le canal de données.

**8.** Appareil destiné à gérer un trafic de paquets selon la revendication 7, dans lequel la longueur d'intervalle inter-paquets requise entre chaque paquet est une fraction rationnelle et le circuit DDS ajuste les longueurs d'intervalle entre paquets à l'intérieur d'une trame de manière que la longueur d'intervalle inter-paquets moyenne se rapproche au moins de la longueur d'intervalle inter-paquets requise.

**9.** Appareil selon la revendication 7 ou la revendication 8, dans lequel le DDS est remis à l'état initial, à la longueur déterminée d'intervalle inter-paquets, à chaque fois qu'un début d'un paquet passe sur le canal de données.

MEMORY
PROCESSOR
COUNTER
MULTIPLEXER
1
2
3
4
5
6
7
8
9

FIG. 1

Total Interframe gap in one cycle of frame sequence
Period timer frame generation
Bunched frames versus total interframe gap
Constant distributed inter-frame gap
10
11
12

FIG. 2